# EUROPEAN PATENT APPLICATION

(11) **EP 1 507 392 A1**
(43) Date of publication of application: **16.02.2005**
(21) Application number: 03730524.0
(22) Date of filing: 19.05.2003
(51) Int. Cl.: H04M 1/73, H04B 7/26

(54) **DEVICE FOR CONTROLLING INFORMATION DISPLAY IN MOBILE COMMUNICATION TERMINAL**

(30) Priority: 20.05.2002 JP 2002145223
(71) Applicant: NTT DoCoMo, Inc., Tokyo 100-6150 (JP)
(72) Inventor: KAMIYA, Dai,Intel. Prop. Dep.,NTT DoCoMo Inc., Chiyoda-ku, Tokyo 100-6150 (JP); YAMADA, Kazuhiro,Intel. Prop. Dep.,NTT DoCoMo Inc., Chiyoda-ku, Tokyo 100-6150 (JP); SUMI, Yutaka, Minato-ku, Tokyo 106-0044 (JP)
(74) Representative: HOFFMANN - EITLE
(86) International application number: PCT/JP2003/006219
(87) International publication number: WO 2003/098902

(57) **Abstract**

A state of a mobile station is changed from active state (240) when a variety of information is displayed, to standby state (280) in a case that a manipulation by a user or an event such as an incoming call from a mobile packet communication network or a mobile telephone network does not occur for a certain period. In standby state (280), voltage is not applied to a liquid crystal display, and thereby a user sees that a display screen is black.

## Description

### Technical Field

The present invention relates to a technology for effectively displaying information in a mobile communication terminal in a power efficient manner.

### Background Art

In recent years, mobile stations which are capable of data communication through networks such as the Internet have come into widespread use. Such mobile stations generally have application software installed which is used for accessing, though a network, sites of interest to a user; and to display information of interest from such sites to the user. Such software can be configured to cause a mobile station in which it is installed to access sites of user interest at specified, predetermined times; to acquire information from such sites; and to store such information in a memory of the mobile station. For example, a mobile station may be used to regularly access a site to download and store specified stock prices at regular intervals, thereby enabling a user of the station to access up-dated information by displaying on a display of the mobile station the specified information which has been downloaded and stored in a memory of the mobile station.

In addition to the customized information mentioned above, it is desirable that a mobile station be able to display a variety of other information acquired through a network such as the Internet. Moreover, a mobile station must be also able to display other basic information such as strength of an available radio signal, an electric charge remaining in a battery of the station, and also the current date and time.

### Disclosure of Invention

The present invention has been made with a view to overcoming the above-mentioned problems, and has an object of providing a mechanism for reducing power consumption in a mobile communicationterminal, and displaying information to a user effectively.

The present invention provides a mobile communication terminal comprising a displaying means for displaying images; an information acquisition means for acquiring information through a mobile communication network; a determination means fordetermining whether the mobile communication terminal is in use; and a display control means for controlling the display means so as to not display information acquired by the information acquisition means in a case that the determination means determines that the mobile communication terminal is notin use, and controlling the display means to display information acquired by the information acquisition means in a case that the determination means determines that the mobile communication terminal isin use.

According to the mechanism described above, it is possible to determine whether a mobile communication terminal is in use, and in a case that a mobile communication terminal is not in use, wasteful consumption of power in displaying information by a mobile communication terminalcan be avoided by controlling a display means so as to not display information acquired through a network, when a mobile communication terminal is not in use. However, if it is determined that a mobile communication terminalis in use, the display means of the mobile communication terminal displays information acquired through a mobile communication network

In the above case, it is preferable that the information acquisition means acquires information proactively, in compliance with predetermined conditions, without instructions input by a user. For example, wherein the information acquisition means has periodical access to a server by way of a mobile communication network, the information acquisition means acquires information stored in a server; or the information acquisition means has access to a server by way of the mobile communication network in compliance with predetermined process conditions, acquires from the server information indicating a process result of the operation between the server and the mobile communication terminal; or the information acquisition means acquires information to be displayed on the display means by extracting a part of information corresponding to predetermined extraction conditions from information transmitted to the mobile communication terminal by a server by way of the mobile communication network.

Accordingly, when a user starts using a mobile communication terminal, the user is able to refer to information acquired proactively by the mobile communication terminal without the user inputting a command

Further, the determination means determines that the mobile communication terminal is not in use ina case that an operation by a user does not occur for a predetermined period of time; or in a case that an information signal is not transmitted for a certain period, the information signal being transmitted from an external device to the mobile communication terminal.

Accordingly, it is possible to determine accurately, on the basis of the above mechanism, that a mobile communicationterminal is not in use.

Further, the display means displays images by applying voltage controlled by the display control means, and the display control means controls so as to not apply voltage between electrodes corresponding to the whole of the display area of the display means in a case that the determination means determines that the mobile communication terminal is not in use.

Accordingly, electric power to be consumed in a display means can be reduced in a case that a mobile communication terminal is not in use

Further, the display means displays images by applying voltage controlled by the display control means, and the display control means controls the display of all information except for information acquired by the information acquisition means, in that, the display control means does not apply voltage between electrodes corresponding to a part of a display area of the display means, but applies voltage between electrodes corresponding to a remaining part of a display area of the display means.

Accordingly, in a case that there is information which is necessary for a user, it is also possible to continue displaying the necessary information whether or not a user uses such information, while at the same time the power consumption of a display means can be reduced if a mobile communication terminalis not in use.

Further, the present invention may be operated by enabling computers installed in a mobile communication terminal comprised of a display device to distribute a program to users through a telecommunication line, or by storing a program in a recording media such as a floppy disk(FD), a compact disk(CD), or a magnetic disk(MD) to distribute to users, the program for operating an information acquisition function for acquiring information through a mobile communication network, a determination function for determining whether the mobile communication terminal is used by a user, and a display control function for controlling the display device so as to not display information acquired by the information acquisition function in a case that the determination function determines that the mobile communication terminal is not in use, and controlling the display device to display information acquired by the information acquisition function in a case that the determination function determines the mobile communication terminal is in use.

In using the program described above, it is possible to avoid unnecessary display of information while a mobile communication terminal is not in use This is because the program makes it possible to determine whether the mobile communication terminal is in use If it is determined that the mobile communication terminal is not in use, the display is controlled so as to not display information acquired through a mobile communication network On the contrary, if it is determined that the terminal is in use, the program makes it possible to control the display so as to display information acquired through a mobile communication network.

According to the present invention, it is determined whether a mobile communication terminal is in use, and information received through a mobile communication network is not displayed in a case that a mobile communication terminal is not in use, but information received through a mobile communication network is displayed in a case that a mobile communication terminal is in use. Consequently, electric power consumption in a mobile communication terminal can be reduced.

### Brief Description of the Drawings

Fig.1 is a block diagram showing the configurationof an overall system using mobile stations according to one of the embodiments of the present invention.
Fig.2 is a plan diagram showing an external configuration of a mobile phone from an anterior view according to the embodiment.
Fig.3 is a block diagram showing the configuration of a mobile station in the embodiment.
Fig.4 is a pattern diagram showing a change of state of a mobile station in the embodiment.
Fig.5 is a screen example displayed on a crystal display of a mobile station.
Fig.6 is a screen example displayed on a crystal display of a mobile station.
Fig.7 is a screen example displayed on a crystal display of a mobile station.
Fig.8 is a screen example displayed on a crystal display of a mobile station.
Fig.9 is a screen example displayed on a crystal display of a mobile station.

### Best mode of carrying out the present invention

The first embodiment of the present invention will be described with reference to drawings.

### <1.Configuration of the embodiment>

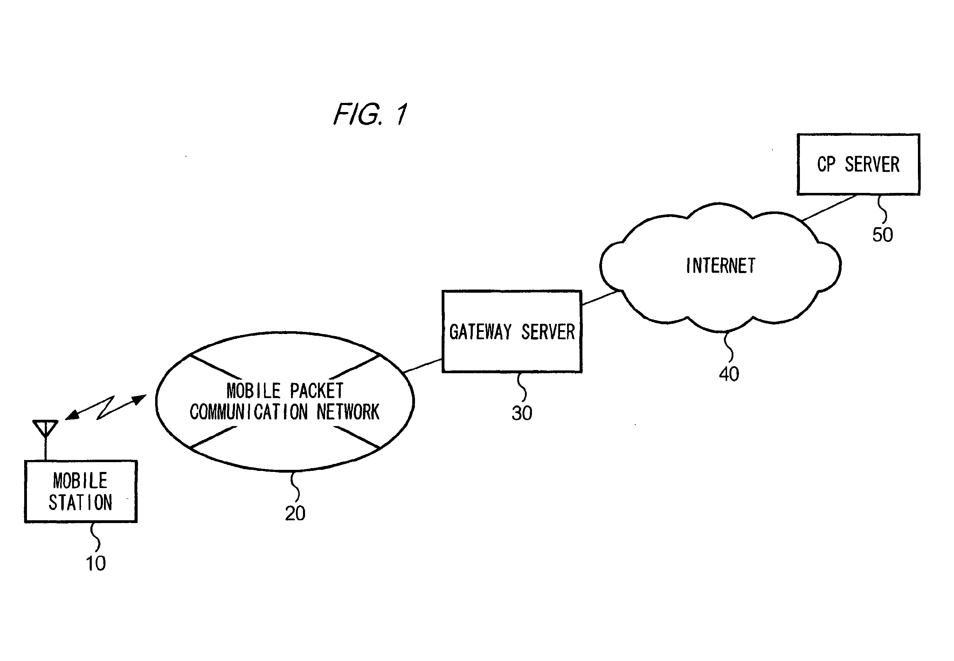

Fig.1 is a block diagram showing the configurationof an overall system of using mobile stations. As shown in this figure, this system is comprised of a mobile station 10 which can be carried around by a user, a mobile packet communication network 20 which provides a mobile packet communication service to mobile station 10, a gateway server 30 which connects mobile packet communication network 20 and Internet 40, a content provider (CP) 50 connected to Internet 40 through a relay node such as a router. Gateway server 30 operates a relay process for data to be transmitted between mobile packet communication network 20 and Internet 40 by operating interconversion of transmission protocols used in mobile packet communication network 20 and TCP/IP which is a standard protocol for Internet 40. In this figure, one mobile station and one server are shown for the sake of simplicity, but in actuality, more mobile stations and servers are located.

Mobile station 10 is, for example, a mobile phone of a PDC (Personal Digital Cellular) system or IMT2000 (International Mobile Telecommunication-2000), or a handy mobile phone of a PHS (Personal Handyphone System) system. Mobile station 10 is located in mobile packet communication network 20, and also in a mobile telephone network (not shown in the figure). Also, mobile station 10 is able to receive communication services provided by a mobile telephone network.

Mobile station 10 stores various types of application software in a memory. This application software is of the following two types:
1. Native application software (hereafter, native application is referred to as native AP) which is originally included at the time of manufacturing mobile station 10 and operates basic controls of mobile station 10.
2. Application software which is written by a Java® programming language (hereinafter, referred to as Java AP Software).

Java AP software may be included in mobile station 10 in advance, or mobile station 10 may download Java AP software through mobile packet communication network 20, and install it in mobilestation 10. Further, mobile station 10 includes Java AP environment software for constructing an environment, which enables Java AP software to operate.

Java AP software provides various types of application. For example, Java AP software provides, a PIM (Personal Information Management) application which stores schedule information input by a user, and displays stored schedule information in accordance with a user's instruction; or a content acquirement application which acquires contents desired by a user and displays desired contents to mobile station 10 that has periodical access to sites (e.g. the site which accumulates various contents such as latest news or stock price information desired by a user) on Internet 40. In this manner, Java AP software in this embodiment includes software which operates various processes in accordance with a user's instructions (e.g. PIM application), or software which operates various processes proactively in accordance with a predetermined process timing or predetermined process conditions without instructions from a user.

CP server 50 is a WWW (World Wide Web) server managed by CP (Content Provider), and stores contents to be provided to a user of mobile station 10 in a nonvolatile memory of a hard disk device and the like. If a HTTP (Hyper Text Protocol) request is transmitted from mobile station 10 via mobile packet communication network 20 and Internet 40 to CP server 50 requesting the above contents, CP server 50 reads out from a nonvolatile memory, the contents requested by mobile station 10. Then, CP server 50 generates a HTTP response, and transmits the generated HTTP response to mobile station 10 through Internet 40 and mobile packet communication network 20. CP server 50 shown in fig.1 stores the latest stock price information as contents, and operates the services of transmitting to mobile station 10 in compliance with a request transmitted from mobile station 10, latest stock price information requested by mobile station 10.

Next, the configuration of mobile station 10 will be described in detail.

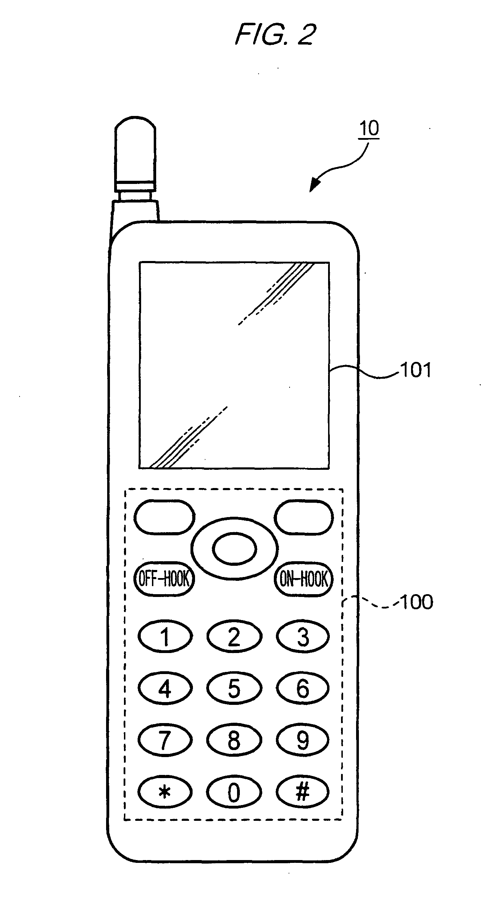

Fig.2 is a plan diagram showing an external configuration of a mobile phone from an anterior view. As shown in this figure, mobile station 10 is comprised of keypad 100 and a crystal display 101. Keypad 100 is for operating various manipulations by a user, and keypad 100 is comprised of a numeric keypad, an on-hook key, an off-hook key, and other manipulation keys. When a user pushes any of the keys, processes corresponding to the pushed keys are operated by mobile station 10.

Liquid crystal display 101 is a TFT (Thin Film Transistor) crystal display screen, and is normally black. In a normally black screen when voltage is not applied between electrodes, light cannot be transmitted through a liquid crystal display because of the orientation of liquid crystal molecules. Consequently, the whole display is black.

Various images configured by text messages or graphics are displayed on liquid crystal display 101. For example, in the case of operating native AP software by mobile station 10, a radio signal strength shown in the shape of an antenna, a charge level shown in the shape of a battery, or date and time set on the basis of clocking time clocked by an internal timer and the like, are displayed on liquid crystal display 101 in accordance with procedures written in native AP software. Further, in the case of operating Java AP software by mobile station 10, a variety of information, such as content stored in a memory is displayed on liquid crystal display 101 in accordance with procedures written in Java AP software. Further, when a user pushes a numeric keypad, numbers corresponding to a numeric keypad are displayed, and when mobile station 10 receives a call signal from a mobile telephone network(that is to say, an incoming call); a telephone number of a caller's phone to be notified is displayed on liquid crystal display 101 by using a well-known caller number notifying function in a mobile telephone network.

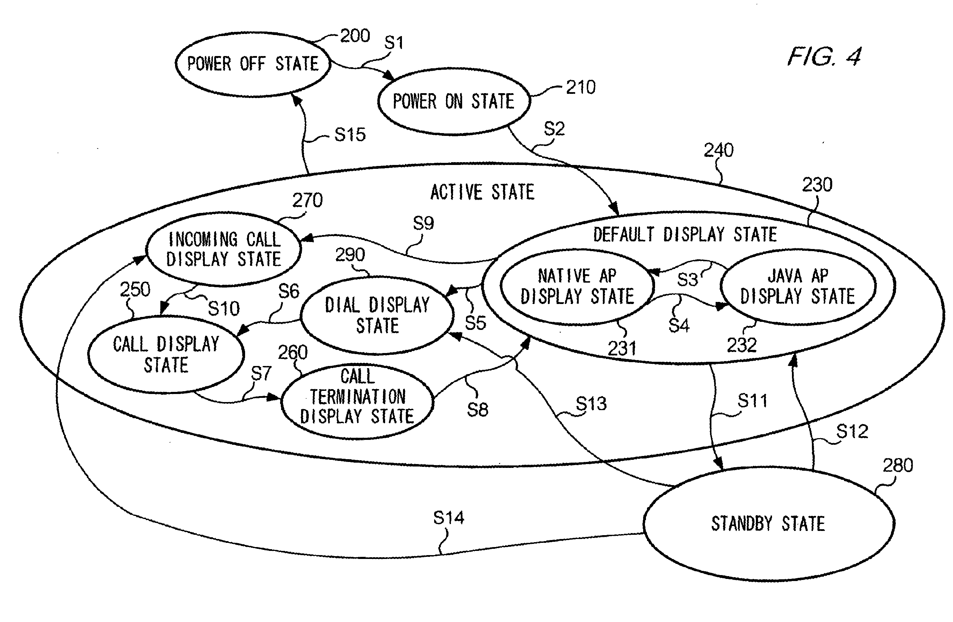

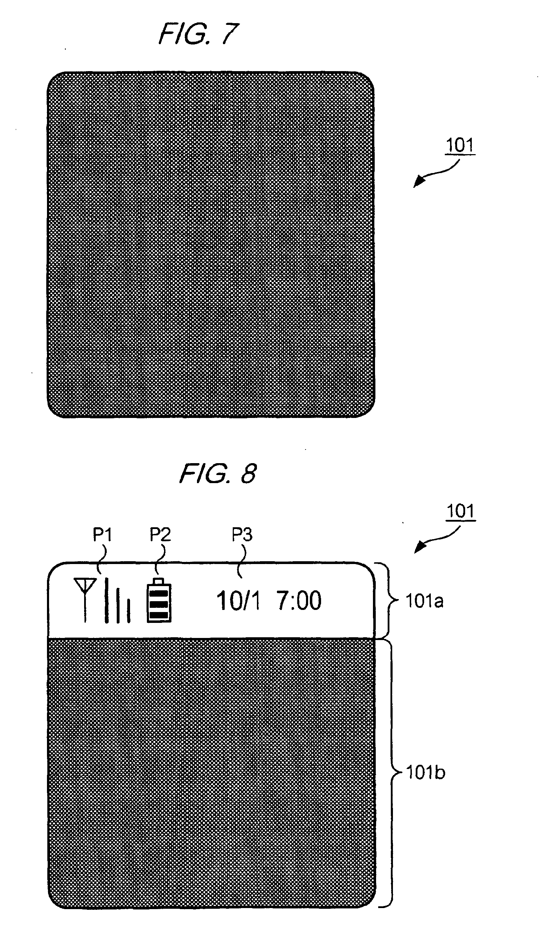

Here, in mobile station 10, there are generally two states, 1.Active State, 2. Standby State. (refer to fig.4). An active state is when a user is using mobile station 10, and a standby state is when a user is not using mobile station 10. The active state and the standby state of mobile station 10 are determined by whether an input event by a user (e.g. the manipulation of keypad 100) or an event in a mobile telephone network (e.g. incoming call) occurs. More specifically, an active state is changed to a standby state in a case that an event does not occur for a certain period when mobile station 10 is in the active state, and a standby state is changed to an active state in a case that an event occurs when mobile station 10 is in the standby state. In the active state, a variety of information is displayed by using liquid crystal display 101, but no information is displayed when mobile station 10 is in a standby state. As a result, no voltage is applied between any of the electrodes corresponding to the whole of the display area of liquid crystal display 101, and as a result, the whole display is black (refer to fig.7).

The reasons as to why information is displayed on liquid crystal display 101 when mobile station 10 is in an active state and why information is not displayed when mobile station 10 is in a standby state, will be described later.

Since a standby state is when an event does not occur for a certain period, for example, when mobile station 10 is left on a desk, or is in a user's pocket for a long period. That is to say, it is unlikely that in this situation a user would check liquid crystal display 101 of mobile station 10. Therefore, it is more effective for information to be displayed on liquid crystal display 101 when a user is likely to be using mobile station 10 as compared to displaying information when a user is not checking information Further, it is effective also from a point of view of consumption of power by liquid crystal display 101. Therefore, mobile station 10 does not display information on liquid crystal display 101 when in a standby state, but displays necessary information for users by using liquid crystal display 101 in a case that an event occurs.

With regard to a case that Java AP software used by mobile station 10 provides a content acquirement application, a standby state of mobile station 10 is changed to an active state when an event occurs, and mobile station 10 displays contents acquired before the event occurred, on liquid crystal display 101 by using the above Java AP software. Then, in a case that an event does not occur for a certain period when mobile station 10 is in a state of displaying contents on liquid crystal display 101, an active state is changed to a standby state, and mobile station 10 no longer displays contents.

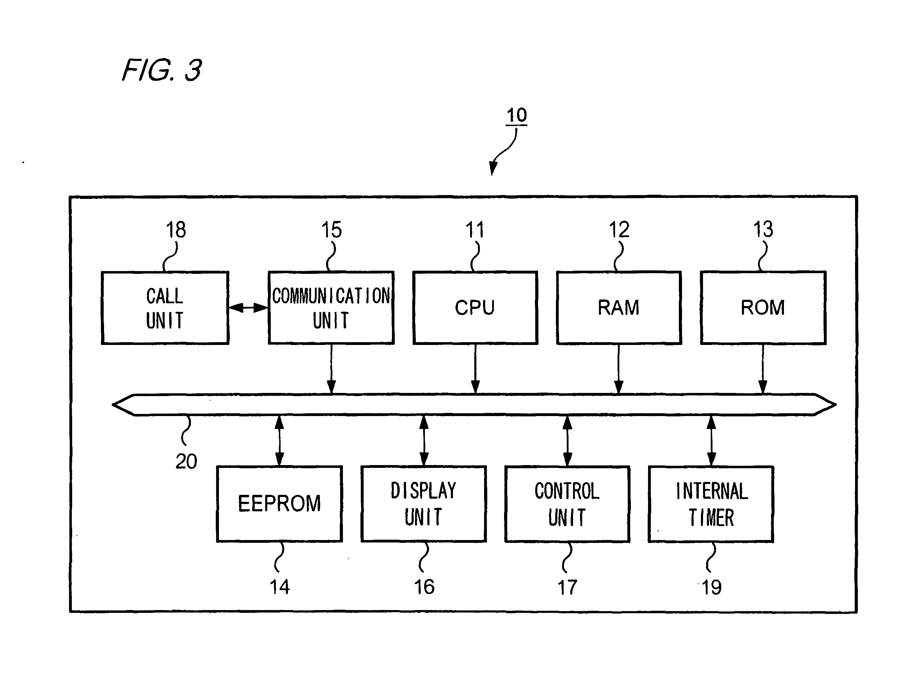

Fig.3 is a block diagram showing the configuration of a mobile station in the embodiment. The above-described native AP software, and various control programs including a state change control program which controls a state of mobile station 10, are stored in ROM 13. A CPU 11 operates a plurality of routines simultaneously by using a multitask control, for example, CPU 11 can operate native AP software and Java AP software simultaneously. A Display unit 16 is comprised of a liquid crystal drive device, which applies voltage between electrodes in liquid crystal display 101 under the control of CPU 11. A Communication unit 15 is comprised of an antenna and a communication control circuit, and operates radio communication with mobile packet communication network 20 or base stations located in a mobile telephone network. A call unit 18 is comprised of microphones or speakers which enable users to speak. Control unit 17 is comprised of keypad 100 and a push key detecting circuit. A push key detecting circuit provides to CPU 11 through an internal bus 20, a signal corresponding to keys pushed by a user, and CPU 11 operates a process corresponding to a signal. RAM 12 is used as a frame memory which stores data to be displayed on liquid crystal display 101.

Java AP software and a time out value are stored in EEPROM 14. As an example of a time out value, the time(e.g. 10 seconds) is preliminarily set by default, but a time out value stored in EEPROM 14 can be changed from 10 seconds to 30 seconds by a user inputting a desired time out value (e.g. 30 seconds) by using keypad 100.

CPU 11 starts checking clock time clocked by an internal timer 19 and a time out value stored in EEPROM 14 at the time of changing to active state, and CPU 11 determines that a user is not using mobile station 10 when the clock time elapses without the occurrence of any event, and CPU 11 operates a process for changing an active state to a standby state. That is to say, CPU11 attempts to not use liquid crystal display 101 by controlling a liquid crystal drive device in display unit 16.

On the other hand, with regard to the occurrence of an event, CPU 11 can detect that an event has occurred because CPU 11 receives a signal from a push key detecting circuit in control unit 17 through internal bus 20; or communication unit 15 receives a call signal transmitted from a mobile telephone communication network Then CPU 11 determines that mobile station 10 is in use. And CPU 11 uses liquid crystal display 101 by controlling a liquid crystal drive device in display unit 16, and displays images by reading out image data and the like stored in RAM 12.

### <2.Operartion of the embodiment>

Fig.4 is a pattern diagram showing a change of state of mobile station 10. In power off state 200 of fig.4, a user turns on mobile station 10 (S1 in fig.4), CPU 11 reads a state change control program from ROM 13, and operates it as a resident program. Accordingly, a state of mobile station 10 is changed from power off state 200 to power on state 210. In power on state 210, CPU 11 reads out from ROM 13, message image data showing the power is on, and CPU 11 displays images on liquid crystal display 101 on the basis of image data, and operates initialization provided to each unit in mobile station 10.

After initialization is completed (S2), a state of mobile station 10 is changed to default display state 230. Default display state 230 is one of a plurality of active states which determines that a user is using mobile station 10, and default display state 230 includes native AP display state 231 and Java AP display state 232. A state of mobile station 10 may be changed to either native AP display state 231 or Java AP display state 232 depending on a type of software operated in default display state 230. Specifically, a state is changed to native AP display state 231 in a case that native AP software is operated by CPU 11, and a state is changed to Java AP display state 232 in a case that Java AP software is operated by CPU 11 in addition to native AP software.

At the time of manufacturing mobile station 10, a state change control program to change a state of mobile station 10 from power on state 210 to native AP display state 231 is programmed, but a state of mobile station 10 is changed from power on state 210 to Java AP display state 232 in a case that a user sets up for which Java AP software is operated in default display state 230 by using control unit 17. Further, in Java AP display state 232, when a user completes operating Java AP software (S3), a state of mobile station 10 is changed from Java AP display state 232 to native AP display state 231. On the contrary, when a user starts operating Java AP software (S4) in native AP display state 231, a state of mobile station 10 is changed from native AP display state 231 to Java AP display state 232.

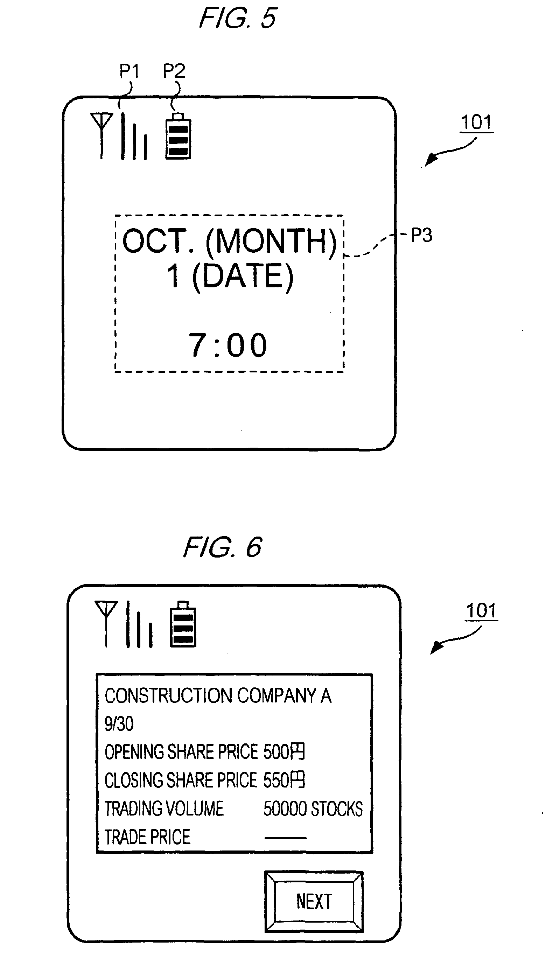

In native AP display state 231, for example, information such as radio signal strength P1, electric charge level P2, or data and hour P3 is displayed on liquid crystal display 101 as shown in fig.5.

On the other hand, in Java AP display state 232, for example, information shown in fig.6 is displayed on liquid crystal display 101. It is assumed that Java AP software operated by mobile station 10 provides an application which acquires stock information and displays it periodically. For example, stock price information, such as "A construction company, September 30, opening share price: 500yen, closing share price: 550 yen, trading volume: 50,000stocks, trade price: no price", is displayed on liquid crystal display 101. This stock price information is acquired from CP server 50 when mobile station 10 operates Java AP software.

That is to say, in the case of changing to Java AP display state 232 from native AP display state 231 by using Java AP software, final stock price information acquired by mobile station 10 and stored in EEPROM 14 while Java AP software is operated is displayed on liquid crystal display 101. Further, while Java AP software is operated, mobile station 10 periodically acquires stock price information from CP server 50. In this case; the previous stock price information in EEPROM 14 is overwritten and updated to the latest stock price information acquired by mobile station 10, and the updated stock price information is displayed on liquid crystal display 101.

Also, when a state of mobile station 10 is changed to default display state 230, CPU 11 starts checking clocking time clocked by an internal timer 19 and a time out value stored in EEPROM 14. Then, in a case that, before a time out value has elapsed, an event occurs, for example, when a user pushes any of the keys of mobile station 10, or mobile station 10 receives a call signal transmitted from a mobile telephone network, default display state 230 is changed to a state corresponding to an event.

For example, a state of mobile station 10 is changed to a dial display state 290 in a case that a user pushes any of the keys of a numeric keypad (S5), and mobile station 10 displays on liquid crystal display 101, numbers corresponding to a numeric keypad. Then, when a user pushes an off-hook key (S6) after manipulating ten keys and inputting a telephone number for making a phone call, a state of mobilestation 10 is changed to a call display state 250, and mobile station 10 displays a message "Calling" and duration of call on liquid crystal display 101.

Further, a state of mobile station 10 is changed to an incoming call display state 270 which displays a message for an incoming call, and a caller's telephone number on liquid crystal display 101 in a case that mobile station 10 receives a call signal from a mobile telephone network (S9), and when a user pushes an off-hook key (S10), a state of mobile station 10 is changed to call display state 250 described above.

Then, when a user pushes an on-hook key (S7) after terminating a call, a state of mobile station 10 is changed to a call termination display state 260, and mobile station 10 displays on liquid crystal display 101, a message indicating that a call is terminated. Mobile station 10 displays this message for a certain period (S8), and a state of mobile station 10 is changed back to default display state 230.

After changing back to default display state 230, CPU 11 restarts the checking of clock time clocked by internal timer 19 and a time out value stored in EEPROM 14.

On the other hand, in a case that a clock time by internal timer 19 elapses, a time out value without the occurrence of any event (S11) results, and a state of mobile station 10 is changed to standby state 280. In standby state 280, CPU 11 attempts to not apply voltage to liquid crystal display 101 by controlling a liquid crystal drive device. Consequently, the whole display of liquid crystal display 101 is black as shown in fig.7.

However, in standby state 280, CPU 11 is configured so as to not use only liquid crystal display 101. Therefore, in standby state 280, CPU 11 operates native AP software or Java AP software, both of which are operated in default display state 230. Consequently, CPU 11 has access to CP server 50 in compliance with procedures written in Java AP software, and acquires contents such as stock price information in a case that Java AP software provides a content acquirement application. Then, CPU 11 overwrites acquired stock price information in EEPROM 14, and further overwrites in RAM 12, image data for displaying stock price information.

After a state of mobile station 10 is changed to standby state 280, in a case that an event occurs, a state of mobile station 10 is changed to a state corresponding to an event.

Principally, a state of mobile station 10 is changed from a standby state 280 to default display state 230. For example, a state of mobile station 10 is changed to -default display state 230 (in this case, to Java AP display state 232) in a case that a user pushes keys other than a numeric keypad (e.g. on-hook key, or off-hook key and the like) (S12). When a state of mobile station 10 is changed to Java AP display state 232, CPU 11 reads out image data stored in RAM 12, redisplays images (e.g. images in fig.6) on liquid crystal display 101 by controlling a crystal display drove device. At this time, stock price information (for example, trade price: not shown in fig.6 is changed to trade price: 530yen), which is different from the previous stock price information shown before the change of a state of mobile station 10 to standby state 280 described above, is displayed on liquid crystal display 101 in a case that mobile station 10 updates stock price information in standby state 280 by operating Java AP software.

However, exceptionally, when the following events occur, a state of mobile station 10 is changed to a state corresponding to each event without going through default display state 230. For example, a state of mobile station 10 is directly changed to dial display state 290 without going through default display state 230 ina case that a user pushes any of ten keys (S13), and mobile station 10 displays numbers corresponding to a numeric keypad Also, a state of mobile station 10 is directly changed to incoming call display state 270 without going through default display state 230 in a case that mobile station 10 receives a call signal from a mobile telephone network (S14).

According to the embodiment described above, in standby state 280 by which it is determined that mobile station 10 is not in use, power consumption in mobile station 10 is reduced because mobile station 10 attempts to not use liquid crystal display 101.

Further, since mobile station 10 keeps operating Java AP software even in standby state 280, it is possible to continue receiving services provided by Java AP software. And, when a state of mobile station 10 is changed to default display state 230, CPU 11 reads out immediately image data from RAM 12, and displays it on liquid crystal display 101 because mobile station 10 stores in RAM 12, image data indicating contents acquired in standby state 280.

### <3.Modification>

While the invention has been described with reference to its currently best-known modes of operation and embodiments, other modes, embodiments and advantages of the present invention will be apparent to those skilled in the art and are contemplated herein. Although those skilled in the art would recognize that other embodiments of the present invention are envisioned, the following claims define the broad scope of the present invention. Further, the present invention may have the following modifications.

### Modification 1

According to the above embodiment, a state of mobile station 10 is changed to default display state 230 in a case that control unit 17 is manipulated by users in standby state 280, and control unit 17 may be comprised of other control devices such as a jog dial or a joy stick other than key pads. Further, liquid crystal display 101 may be configured as touch panels, and when users touch liquid crystal display 101, a state of mobile station 10 may be changed from standby state 280 to default display state 230. Further, a contact sensor may be attached to a part of mobile station 10, and when users touch the contact sensor, a state of mobile station 10 may be changed from standby state 280 to default display state 230. Further, a microphone in call unit 18 may be used as a control device. In this case, a state of mobile station 10 is changed from standby state 280 to default display state 230 on the basis of the determination that a user operates mobile station 10 by speaking into a microphone.

### Modification 2

According to the above embodiment, it is determined that an event has occurred when mobile station 10 receives a call signal transmitted from a base station in a mobile telephone network, but the occurrence of an event can be determined also in a case that mobile station 10 receives a call signal from other external devices. For example, in a case that an external device, such as a notebook personal computer, or PDA (Personal Digital Assistant) connected to mobile station 10 by a wireless or a wired connection is used, it can be determined that an event has occurred, since it is likely that liquid crystal display 101 is checked by a user when mobile station 10 receives a signal transmitted from an external device that a user manipulates. However, it is preferable to determine the occurrence of events in a case that mobile station 10 receives from external devices, an information signal indicating that substantive information is transmitted and received, because mobile station 10 may operate transmission and reception of a simple control signal.

### Modification 3

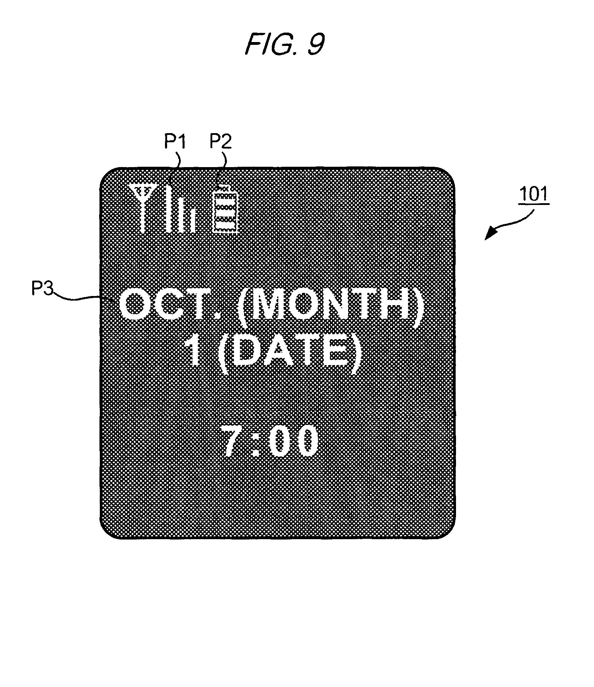

In standby state 280, mobile station 10 attempts to not apply voltage between electrodes corresponding to the whole display area of liquid crystal display 101, however, information is displayed only in apart of the display area. For example, as shown in fig.8, a display area of liquid crystal display 101 may be configured by dividing an area 101a which displays information in standby state 280, and an area 101b which does not display information in standby state 280. Further, as shown in fig.9, only a part of display area has information highlighted, and a remaining display area may not be used. In this case, with regard to information to be displayed in standby state 280, the displayed information is not that which is acquired by mobile station 10 through mobile packet communication network 20, but is information (such as radio signal strength P1, electric charge level P2, or data and hour P3) to be displayed in native AP display state 231 which is displayed. The present invention is characterized in that information acquired by mobile station 10 through mobile packet communication network 20 is displayed in active state 240.

### Modification 4

According to the above embodiment, information (such as contents) acquired by mobile station 10 through mobile packet communication network 20 is displayed only in Java AP display state 232. However, mobile station 10 may display information (such as contents) on liquid crystal display 101 whenever a state of mobile station 10 is changed from standby state 280 to active state 240 when mobile station 10 detects the occurrence of any event. That is to say, in the above embodiment, a state of mobile station 10 is changed to default display state 230 ina case that a user pushes keys (e.g. an on-hook key or an off-hook key) other than a numeric keypad (S12 in fig.4) in standby state 280, and mobile station 10 displays information acquired by Java AP software. But mobile station 10 does not display information acquired by Java AP software in a case that a user pushes any of the keys of a numerical keypad (a state of mobile station 10 is changed to dial display state 290 in fig.4), or mobile station 10 receives a call signal from a mobile telephone communication network (a state of mobile station 10 is changed to incoming call display state 270 in fig.4). However, in the above case, mobile station 10 may display information acquired by Java AP software in addition to dial display and incoming call display.

Further, in the case of a user pushing keys other than a numerical keypad (S12 in fig.4), mobile station 10 may display information acquired by Java AP software in addition to information acquired by native AP software in a case that mobile station 10 does not set Java AP software to default display state 230 running Java AP software regularly (a state of mobile station 10 is changed to native AP display state 231, shown in fig.4).

Further, besides active state 240, for example, in call display state 250, or in call termination display state 260, mobile station 10 may display information acquired by Java AP software.

With regard to active state 240 in mobile station 10, in Java AP display state 232, Java AP software is in an active state (active state of Java AP software), and Java AP software operates specified functions corresponding to pushed keys by user's manipulation. On the other hand, with regard to other states of active state 240 of mobile station 10, although Java AP software is operated, not each key of mobile station 10 corresponds to the operating of Java AP software, that is to say, although a user pushes specified keys, the specified functions of Java AP software are not operated (i.e. inactive state of Java AP software). In this case, in an inactive state, Java AP software operates specified tasks in compliance with predetermined timing or conditions withoutbeing aware of a user. For example, in a case that Java AP software has periodic access to CP server 50, and acquires contents, Java AP software overwrites the previously acquired contents in EEPROM 14, each time fresh contents are acquired. Further Java AP software overwrites in RAM 12, the image data for displaying contents corresponding to previously acquired contents Consequently, although Java AP software is in an inactive state when a state of mobile station 10 is changed to active state 240, it is possible to display contents acquired by Java AP software state since CPU 11 reads out content image data stored in RAM 12 and displays it on liquid crystal display 101.

The above modification makes it possible to display information in a more effective mannerso that mobile station 10 displays contents acquired through the network regardless of whether Java AP software is in an active or inactive state, because it is likely that a user would check the screen of a display device when using mobile station 10 (active state 240 of mobile station 10).

### Modification 5

According to the above embodiment, TFT-type liquid crystal display 101 adopting a screen which is normally black is exemplified, but a normally white display screen, or an active matrix type or a passive matrix type, or a transparent type or reflective type screen may also be employed Further, in a case of a transparent type of display screen having a backlight, it is also possible to control so as not to display information when in standby state 280 by turning off the back light.

### Modification 6

According to the above embodiment, Java AP software which provides a content acquirement application is exemplified However, for example, Java AP software may provide a reservation application, by which a user has access to sites on the Internet which list accommodation facilities such as hotels, or transport facilities through which bookings can be made, and the results transmitted from the sites are acquired and displayed by mobile station 10. Or, Java AP software may provide an e-mail backup application from which mobile station 10 may extract information, such as a mail title, name of sender, or a part of the contents of the mail in compliance with predetermined extraction conditions when receiving an e-mail transmitted through mobile packet communication network 20, and mobile station 10 displays the extracted information as an incoming mail notification message. In a case of Java AP software providing the above described reservation application at a time when an event occurs in standby state 280, mobile station 10 has to only display the results acquired from CP server 50 during standby state 280. Further, in the case of Java AP software providing the above-described e-mail backup application, at a time an event occurs in standby state 280, mobile station 10 has to only display on liquid crystal display 101, information extracted from the received e-mail during standby state 280.

Below described are examples of information acquisition modes of the present invention.
1. Mobile station 10 has periodical access to CP server 50 through mobile packet communication network 20 and Internet 40, and acquires information stored in IP server 50,
2. Mobile station 10 acquires from CP server 50, information indicating process results operated with CP server 50 in accordance with predeterm ined process conditions,
3. Mobile station 10 acquires information by extracting a part of an e-mail corresponding to predetermined extraction conditions from an e-mail transmitted by CP server 50.

### Modification 7

Further, a mobile communication terminal of the present inventionis not limited to mobile station 10 such as a mobile phone described above or a PHS, but a mobile communication terminal is also a mobile communication terminal which does not have a telephone function such as PDA (Personal Digital Assistant). Further, CP server 50 may be connected to gateway server 30 through a leased line, or CP server 50 may be installed inside gateway server 30 besides being connected to gateway server 30 through Internet 40 as shown in fig.1.

## Claims

1. A mobile communication terminal comprising:
a display means for displaying images;
an information acquisition means for acquiring information through a mobile communication network;
a determination means for determining whether or not the mobile communication terminal is in use; and
a display control means for controlling said display means so as to not display information acquired by said information acquisition means in a case that said determination means determines that the mobile communication terminal is not in use, and controlling said displaymeans to display information acquired by said information acquisition means in a case that said determination means determines that the mobile communication terminal is in use.

2. A mobile communication terminal according to Claim 1,
wherein said information acquisition means acquires said information proactively, in compliance with predetermined conditions without manipulation by a user.

3. A mobile communication terminal according to Claim 2,
wherein said information acquisition means has access to a server periodically by way of said mobile communicationnetwork, and acquires information stored in the server.

4. A mobile communication terminal according to Claim 2,
wherein said information acquisition means has access to a server by way of said mobile communication network in compliance with predetermined process conditions, and acquires from the server, information indicating a process result of an operation between the server and the mobile communication terminal.

5. A mobile communication terminal according to Claim 2,
wherein said information acquisition means acquires information to be displayed on said display means by extracting a part of information from information transmitted to the mobile communication terminal by a server by way of said mobile communication network, the part of information corresponding to predetermined extraction conditions.

6. A mobile communication terminal according to Claim 1,
wherein said determination means determines that the mobile communication terminal is not in use ina case that manipulation by a user does not occur for a certain period.

7. A mobile communication terminal according to Claim 1,
wherein said determination means determines that the mobile communication terminal is not in use in a case that an information signal is not transmitted for a certain period, the information signal being transmitted from an external device to the mobile communication terminal.

8. A mobile communication terminal according to Claim 1,
wherein said display means displays images by applying a voltage controlled by said display control means, and said display control means does not apply the voltage between electrodes corresponding to the whole display area of said display means in a case that said determination means determines that the mobile communicationterminal is not in use.

9. A mobile communication terminal according to Claim 1,
wherein said display means displays images by applying a voltage controlled by said display control means, and said display control means controls the display of all information except for information acquired by said information acquisition means, and said display control means does not apply a voltage between electrodes corresponding to a part of a display area of said display means, but applies a voltage between electrodes corresponding to a remainingpart of a display area of said display means.
